# EUROPEAN PATENT SPECIFICATION

(11) **EP 0 606 730 B1**
(45) Date of publication and mention of the grant of the patent: **02.04.1997**
(21) Application number: 93309898.0
(22) Date of filing: 08.12.1993
(51) Int. Cl.: B60J 7/06

(54) **Opening roof for a vehicle**
Faltdach für Fahrzeuge
Toit ouvrant pour véhicule

(30) Priority: 09.01.1993 GB 9300354
(43) Date of publication of application: 20.07.1994
(73) Proprietor: Inalfa Industries B.V., NL-5804 AB Venray (NL)
(72) Inventor: Price, David Michael, Walsall, West Midlands W57 0HQ (GB); Botfield, Michael Sydney John, Bournville, Birmingham B30 2HN (GB)
(74) Representative: de Vries, Johannes Hendrik Fokke

(56) References cited:
- EP-A- 0 336 414
- DE-A- 4 023 500
- DE-B- 1 150 585
- DE-C- 917 594
- GB-A- 945 576

## Description

This invention relates to an opening roof for a vehicle of the type comprising a cover of flexible sheet material for closing an opening in the vehicle roof, the cover being supported by a front main cross-member and a number of rearward main cross-members which are guided at their ends on guide rails extending along each side of a longitudinal opening in the vehicle roof, and by intermediate cross-members carried from the main cross-members by rearwardly extending resilient fingers which are secured by their forward ends to the main cross-members and anchored at their rear ends in the intermediate cross-members and which maintain an upward pressure on the intermediate cross-members whereby transverse folds are formed in the cover when the front main cross-member is moved rearwardly to uncover the opening.

GB-A-945576 discloses an opening roof of this type. There is no provision for securing the other main cross-members in any particular position when the front cross-member is an intermediate position between its fully open and fully closed positions.

According to the invention, in one aspect, each of the main cross-members has a respective guide shoe on each end engaging in the corresponding guide rail, each guide shoe on the rearward main cross-members carrying a resiliently mounted detent formation adapted to engage with a complementary formation on the guide rail to prevent rearward movement thereof from its fully forward position, each detent formation having associated release means adapted to be engaged by camming means on the corresponding guide shoe of the main cross-member next in front of such rearward main cross-member so as to cause disengagement of said detent formation from its complementary formation when adjacent guide shoes come into abutment with one another.

An embodiment of the invention will now be described, by way of example, with reference to the accompanying drawings, in which:
Figure 1 is a plan view of an opening roof in accordance with the invention;
Figure 2 is a cross-sectional view, taken on the line 2-2 in Figure 1, showing the front main cross-member;
Figure 3 is a plan view of the front main cross-member shown in Figure 1, with the opening roof cover removed and showing a latching member for engagement with the front edge of the roof opening;
Figure 4 is a scrap perspective view from the front of a frame member bounding the front edge of the roof opening and showing a striker plate for engagement by the latch shown in Figure 1;
Figure 5 is an exploded perspective view corresponding to Figure 4;
Figure 6 is a partially broken away scrap plan view from above showing an end of one of the main cross-members together with the corresponding end of its intermediate cross-member and with the flexible cover removed;
Figure 7 is a cross-sectional view taken on the line 7-7 in Figure 6;
Figure 8 is a cross-sectional view taken on the line 8-8 in Figure 6; and
Figure 9 is a cross-sectional view taken on the line 9-9 in Figure 7.

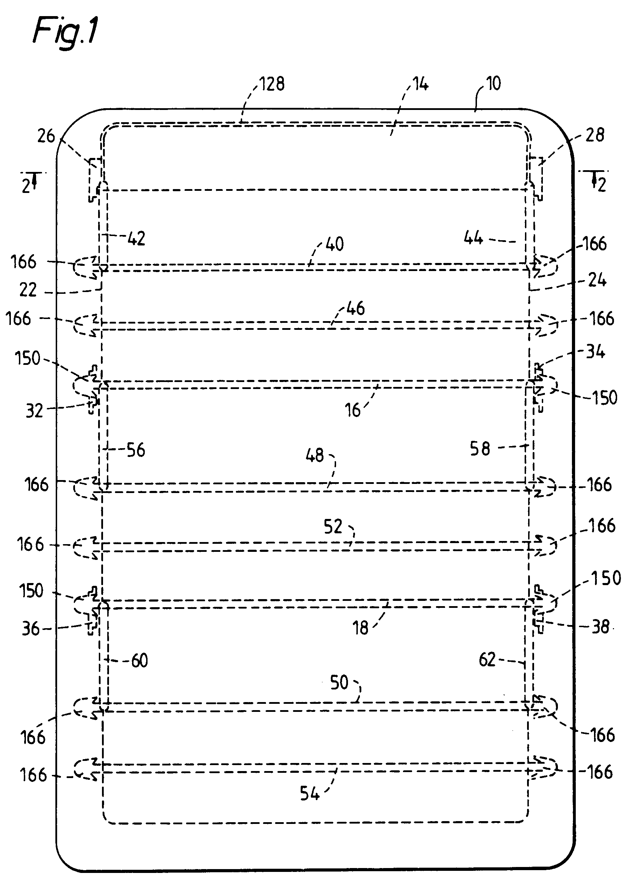

Referring to Figure 1, a rectangular opening in a vehicle roof is rectangular and has a water check frame extending along each side and the front and rear edges of the opening. A cover 10 for the opening, of flexible sheet material such as polyvinyl chloride, is supported on a series of cross-members which are of three different types. A front main cross-member 14 and two other main cross-members 16 and 18 have guide shoes on each end which slidably engage in guide rails 22 and 24 which form the side members of the water check frame. The guide shoes 26 and 28 on the front cross-member are of a first type, while the guide shoes 32, 34, 36 and 38 on the other two main cross-members 16 and 18 are of a second type.

Behind the front cross-member 14 is a first intermediate cross-member 40 which is connected at its ends to the end of the front cross-member 14 by a pair of spring fingers 42 and 44, each of which comprises a strip of spring steel. Behind the intermediate cross-member 40 is an auxiliary cross-member 46 which is merely secured to the cover 10 and serves to provide a predetermined location for a fold line when the cover 10 is opened, as will be explained hereinafter. Similarly, the other main cross-members 16 and 18 have respective intermediate cross-members 48 and 50 and auxiliary cross-members 52 and 54. Each of the intermediate cross-members 48 and 50 is connected to the corresponding slidably guided cross-member by spring fingers 56, 58 and 60 and 62, which are similar to the spring fingers 42 and 44.

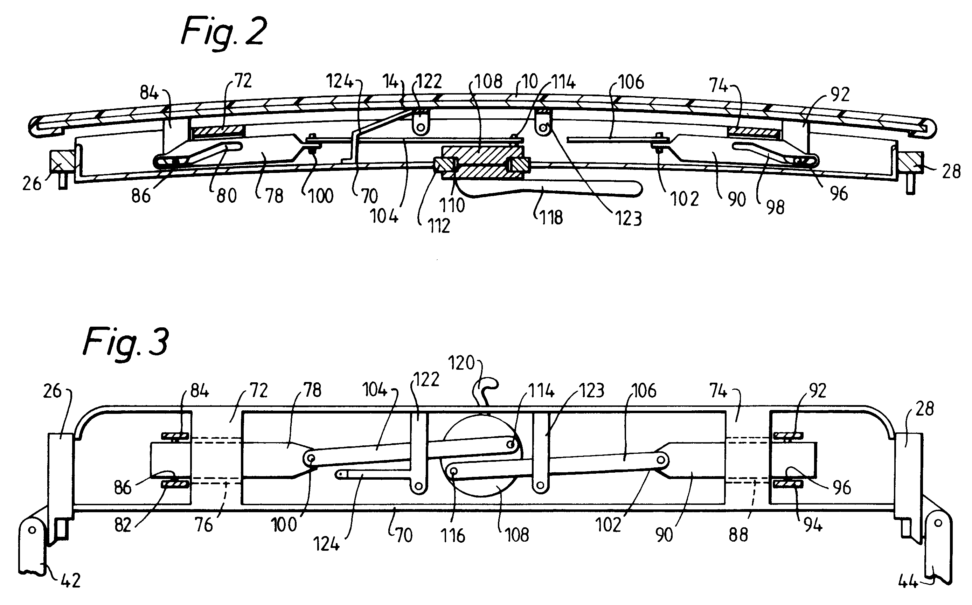

Figures 2 and 3 illustrate the mounting of the front cross-member 14 in more detail. The two guide shoes 26 and 28 are secured to opposite ends of a front carriage 70 which is of generally U-shaped cross-section, having a closed bottom, front and rear edge walls and a generally open top. Within the channel are two guide blocks 72 and 74. The guide block 72 has a horizontally extending guide channel 76 which accommodates a cam slide 78 containing a cam slot 80 which has horizontal end portions connected by an inclined intermediate portion. A pair of legs 82 and 84 have their upper ends secured to the front cross-member 14. A pin 86 interconnects the lower ends of the legs 82 and 84 and projects through the cam slot 80.

Similarly, the guide block 74 has a horizontal guide channel 88 containing a cam slide 90. Two legs 92 and 94 project downwardly from the front cross-member 14. A pin 96 extends between the lower ends of the legs 92 and 94 and through a cam slot 98 in the cam slide 90. The cam slot 98 has two horizontal end portions interconnected by an inclined intermediate portion.

The lower ends of the two cam slots 80 and 98 are at the outboard ends of the respective cam slides 78 and 92 so that, when the two cam slides are pulled towards one another, the front cross-member 14 is pulled downwardly. On the other hand, when the two cam slides 78 and 90 are pushed apart from one another, the front cross-member 14 is raised. In order to achieve this movement, each cam slide 78, 90 is attached by a respective pivot pin 100, 102 to a respective connecting link 104, 106. A latch disc 108 (which is formed in two separable parts to permit assembly) has a groove 110 in its periphery by which it is journalled in an annular bearing 112 received in a hole in the central portion of the front carriage 70. The disc 108 carries two diametrically opposed pivot pins 114 and 116 which provide pivotal connections for the two connecting links 104, 106.

The latch disc 108 has an operating handle 118 mounted on its bottom face and a latch hook 120 projecting through a slot (not shown) in the front wall of the front carriage 70. When the latch disc 108 is in the orientation shown in Figures 2 and 3, with the hook 120 projecting forwardly, the pins 88 and 100 and at the bottom ends of the slots 80 and 102 in the cam slides 78 and 90 and the front cross-member 14 is pulled down into its lowest position in which the cover 10 abuts against the surface of the vehicle roof in front of the opening. If the handle 118 is used to rotate the disc 108 in the anti-clockwise direction, as viewed in Figure 3, the cam slides 78 and 90 are pushed apart from each other, the front cross-member 14 is raised and the cover lifted clear of the vehicle roof.

A pair of spring strips 122 and 123 have their ends riveted respectively to the front cross-member 14 and the front carriage 70 to prevent relative horizontal movement. The strip 122 has a side branch 124 near the end which is attached to the front cross-member 14. The free end of the side branch 124 is riveted to the front carriage 70 in order to resist angular movement of the strips 122 and 123 about their rivets.

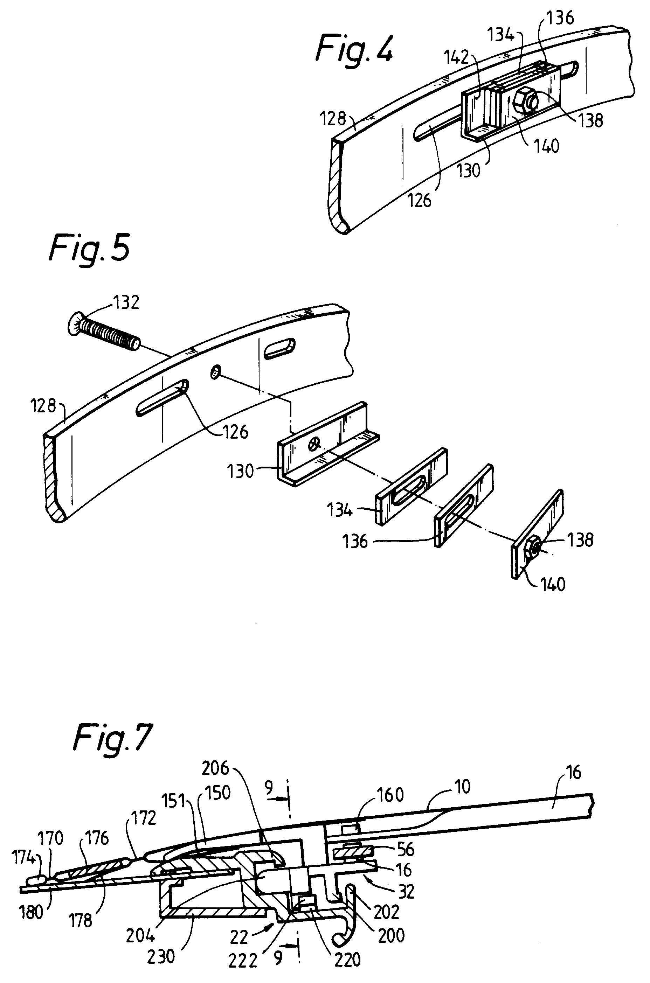

Referring to Figures 4 and 5, when the front carriage 70 is in its forward position and the latch disc 108 in the orientation illustrated in Figure 3, the hook 120 engages in a slot 126 in a flange 128 forming part of the front member of the water check frame. Figures 4 and 5 show the front face of this flange, the hook 120 projecting through from the other side. One end of the slot 126 is covered by an L-shaped member 130 which is secured to the flange 128 by a bolt 132, the bolt 132 projecting through slots in two shims 134 and 136 so as to engage with a nut 138 which is non-rotatably secured to a plate 140. With the components in the position illustrated in Figure 4, the hook 120 engages with the surface 142 of the L-shaped 130. However, one or both of the plates 134 and 136 can be slid to the left as viewed in Figure 4 and clamped in that position. The hook 120 then engages with the exposed face of one of these plates, which thus providing adjustment of the fore and aft tension in the cover 10.

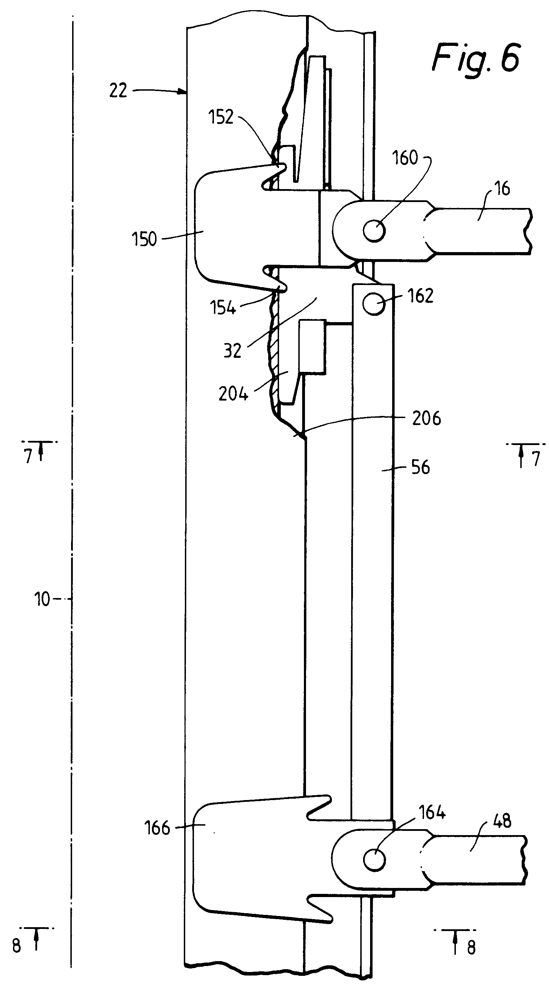

Figure 6 shows the left-hand end of the main cross-member 16 and of its associated intermediate member 48 together with part of the left-hand guide rail 22. The cover 10 has been removed but the position of its left-hand edge is shown in chain dotted lines. The guide shoe 32 which supports the main cross-member 16 has an integrally formed spade projection 150 which is received in a slot (not shown) in a flap 151 on the edge of the cover 10. The spade formation 150 has a pair of inwardly directed tabs 152 and 154 which are spaced apart by a distance greater than the length of the slot, so that the spade formation 150 has to be inserted obliquely, the cross-member 16 being sufficiently bendable to permit such oblique insertion. This arrangement prevents inadvertent detachment of the cover from the cross-member 16. As can be seen from Figure 1, the other three guide shoes 34, 36 and 38 have similar spade formations 150.

The guide shoe 32 is secured to the cross-member 16 by a rivet 160 and to the spring steel strip 56 by a rivet 162. At its other end, the spring steel strip 56 is attached by a rivet 164 both to the intermediate cross-member 48 and to a spade member 166 which is of the same shape as the spade formation 150 and is received in a pocket (not shown) in the cover 10 in a similar manner. As can be seen from Figure 1, there are similar spade formations 166 on the ends of the other intermediate cross-members 40, 46, 50, 52 and 54. The means of attachment of the spring steel strips 42, 44, 58, 60 and 62 is similar to that of the spring steel strip 56 (see also Figure 3).

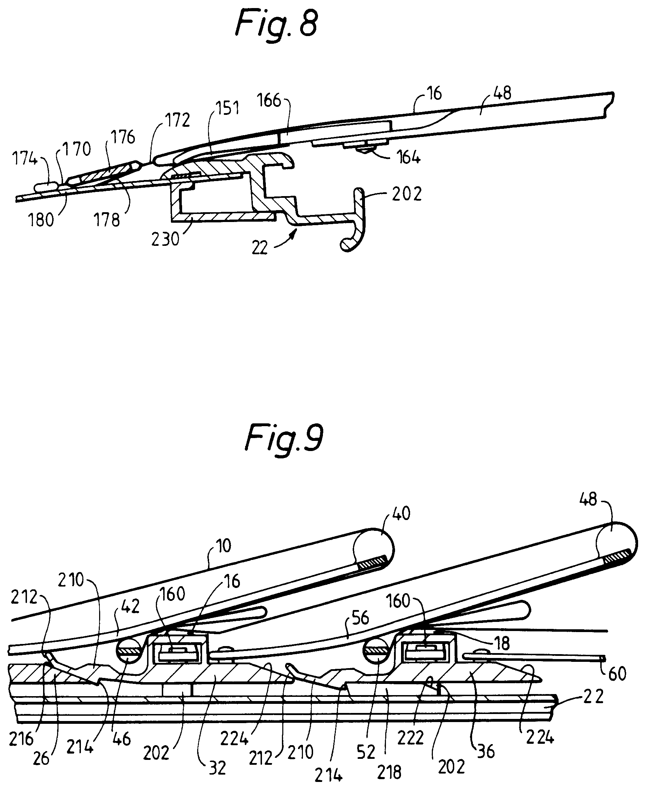

Referring to Figures 7 and 8, the cover 10 has its edge outside the spade formations 150 and 166 doubled back on itself and joined along two weld lines 170 and 172 so as to provide the above-mentioned flap 151 The sheet material outside the outer weld line 170 forms a bead 174. A flexible reinforcing strip 176 is enclosed between the two weld lines 170 and 172. In addition, a further flap 178 of resilient material such as synthetic rubber is attached at the second weld line 172. When the roof is its closed position with the cover tensioned by engagement of the hook 120 with one of the latch plates 130, 134 or 136 (Figures 3 and 4), the bead 170 is pulled down on to the adjacent surface of the vehicle roof 180. If irregularities in the cover 10 or the roof 180 cause breaks in this line of contact, the flap 178 forms a secondary seal to prevent water lying on the surface of the roof 180 being blown underneath the cover 10. The very small amount of water which can be expected to pass the bead 174 and seal 178 is prevented from entering the vehicle through the roof opening by the water check frame.

Referring to Figures 6, 7 and 9, the guide shoe 32 has a downwardly projecting limb 200 which engages with a side wall 202 on the inner edge of the guide rail 22, and an outwardly projecting limb 204 which engages under a flange 206 on the outer edge of the guide rail 22. The limb 202 prevents inward movement of the guide shoe 32 and thus prevents the guide shoe from coming out of the guide rail 22 due to the cross-member 16 becoming skewed diagonally across the roof opening. The limb 204 prevents the shoe 32 from being lifted out of the guide rail 22.

Referring particularly to Figure 9, which shows the roof partly open and the guide shoe 36 still in its fully closed position, the various component parts of the guide shoe 36 are denoted by the same reference numerals as the corresponding parts of the guide shoe 32. At the front end of each of the guide shoes 32 and 36 is a forwardly projecting resilient finger 210 with a cam ramp 212 on the underside of its front end and a detent formation 214 behind the cam ramp 212. The resilient finger 210 of the guide shoe 32 is bent into a raised position by engagement of the cam ramp 212 with a complementary cam ramp 216 on the rear end of the guide shoe 26 of the front cross-member. On other hand, the resilient finger 210 of the guide shoe 36 is in a normal position in which the detent formation 214 engages with a stop block 218 which is secured to the guide rail 22. This prevents rearward movement of the guide shoe 36 and thus keeps that part of the cover 10 which is behind the cross-member 18 reasonably taut. Figure 7 shows the equivalent stop block 220 which is engaged by the detent formation 214 on the guide shoe 32 when the latter is in its forward position as illustrated in Figures 1 and 7. Both stops blocks 202 and 220 have ramps 222 on their rear ends to lift the corresponding detent formations upwardly as the corresponding guide shoe 32, 36 moves forwardly to its position as illustrated in Figure 1.

If the guide shoe 32 is moved rearwardly from its position shown in Figure 9, a ramp 224 on its rear end (similar to the ramp 216 on the shoe 26) engages with the cam surface 212 on the guide shoe 36 so as to raise its detent formation 214 clear of the stop block 218 and allow the guide shoe 36 to move rearwardly.

Figures 7 and 8 also show a clamping member 230 which is secured to the rail 22 and engages under the vehicle roof 28. This method of securing the frame members of a water check frame to a vehicle roof is well known and will not be described in more detail.

When the roof illustrated in the drawings is to be opened, the latch lever 118 is first pivoted through 90° to release the hook 120 and raise the front cross-member 14 so that the front edge of the cover 10 is clear of the vehicle roof. The front cross-member can then slide rearwardly, the spring strips 42 and 44 moving the intermediate cross-member 40 backwards with it. When the intermediate cross-member 40 and the corresponding auxiliary cross-member 46 have moved back sufficiently to abut against the next main cross-member 16, the intermediate cross-member 40 rides over the cross-members 46 and 16 as illustrated in Figure 9. When the ramp 216 on the rear end of the guide shoe 26 engages with the cam surface 212 on the guide shoe 32, it disengages the detent formation 214 from its stop block 220, allowing the cross-members 16, 48 and 52 to move rearwardly to the position illustrated in Figure 9. Further rearward movement causes disengagement of the detent formation 214 of the main cross-member 18 from the stop block 218. All of the cross-members are now free to move rearwardly to the fully opened position of the roof.

When the roof is to be closed, the various cross-members are pulled forwardly, the ramps 222 on the rear edges of the stop blocks 202 and 220 ensuring that forward movement of the slide shoes 32 and 36 is not obstructed.

The slide shoes 28, 34 and 38 which run in the guide rail 24 on the other side of the roof are mirror images of the slide shoes 26, 32 and 36, respectively, and the mechanism operates in a similar manner.

## Claims

1. An opening roof for a vehicle of the type comprising a cover (10) of flexible sheet material for closing an opening in the vehicle roof, the cover (10) being supported by a front main cross-member (14) and a number of rearward main cross-members (16, 18) which are guided at their ends on guide rails (22, 24) extending along each side of a longitudinal opening in the vehicle roof, and by intermediate cross-members (40, 48, 50) carried from the main cross-members (14, 16, 18) by rearwardly extending resilient fingers (42, 44, 56, 58, 60, 62) which are secured by their forward ends to the main cross-members (14, 16, 18) and anchored at their rear ends in the intermediate cross-members (40, 48, 50) and which maintain an upward pressure on the intermediate cross-members (40, 48, 50) whereby transverse folds are formed in the cover (10) when the front main cross-member (14) is moved rearwardly to uncover the opening, characterised in that each of the main cross-members (14, 16, 18) has a respective guide shoe (26, 28, 32, 34, 36, 38) on each end engaging in the corresponding guide rail (22, 24), each guide shoe (32, 34, 36, 38) on the rearward main cross-members (16, 18) carrying a resiliently mounted detent formation (214) adapted to engage with a complementary formation (218) on the guide rail (22, 24) to prevent rearward movement thereof from its fully forward position, each detent formation (214) having associated release means (212) adapted to be engaged by camming means (216) on the corresponding guide shoe (26, 28, 32, 34) of the main cross-member (14, 16) next in front of such rearward main cross-member (16, 18) so as to cause disengagement of said detent formation (214) from its complementary formation (218) when adjacent guide shoes (26, 28, 32, 34, 36, 38) come into abutment with one another.

2. An opening roof according to claim 1, wherein each guide shoe (32, 34, 36, 38) on the rearward main cross-members (16, 18) has a forwardly projecting resilient finger (210) carrying the detent formation (214).

3. An opening roof according to claim 2, wherein the release means comprises a cam ramp (212) on the resilient finger (210) and the camming means comprises a complementary cam ramp (216) on the rear end of the guide shoe (26, 28, 32, 34) next in front.

4. An opening roof according to claim 3, wherein each complementary formation (218) on the guide rail (22, 24) has a ramp (222) on its rear end to lift the corresponding detent formation (214) upwardly as the corresponding guide shoe (32, 36) moves forwardly.

5. An opening roof according to any preceding claim, further comprising a respective auxiliary cross-member (46, 52, 54) behind each intermediate cross-member (40, 48, 50).

6. An opening roof according to any preceding claim, wherein the front main cross-member (14) has a latch comprising an angularly movable latch hook (120) engageable with an edge of a latch plate (130) on the front edge (128) of the opening in the vehicle roof, the latch plate (130) having a plurality of slidably mounted shims (134, 136) which are movable into a position in which they are engaged between the latch plate (130) and the latch hook (120).

7. An opening roof according to any preceding claim, wherein the guide shoes (26, 28) for the front main cross-member (14) are secured to a front carriage (70) on which a pair of cam slides (78, 90) are mounted for transverse linear movement, each cam slide (78, 90) containing an inclined cam slot (80, 98) for receiving a pin (86, 96) which is secured to the front main cross-member (14), whereby transverse movement of the cam slides (78, 90) causes vertical movement of the front main cross-member (14).

8. An opening roof according to any preceding claim, wherein the cover (10) has a flap (178) of resilient material attached to its lower surface adjacent to at least part of its periphery, so that, when the roof is its closed position with the cover (10) tensioned, the flap (178) forms a seal to prevent water lying on the surface of the vehicle roof (180) being blown underneath the cover (10).

## Patentansprüche

1. Öffnungsdach für ein Fahrzeug des Typs mit einer Abdeckung (10) aus flexiblem Plattenmaterial zum Schließen einer Öffnung in dem Fahrzeugdach, wobei die Abdeckung (10) von einem vorderen Hauptquerglied (14) und einer Anzahl von hinteren Hauptquergliedern (16, 18), welche an ihren Enden auf Führungsschienen (22, 24) geführt werden, die sich entlang jeder Seite einer Längsöffnung in dem Fahrzeugdach erstrecken, und von Zwischenquergliedern (40, 48, 50) abgestützt wird, die von den Hauptquergliedern (14, 16, 18) mittels nach hinten sich erstreckenden elastischen Fingern (42, 44, 56, 58, 60, 62) getragen werden, welche an ihren vorderen Enden an den Hauptquergliedern (14, 16, 18) und an ihren hinteren Enden an den Zwischenquergliedern (40, 48, 50) befestigt sind und welche einen Druck nach oben auf die Zwischenquerglieder (40, 48, 50) ausüben, wodurch querverlaufende Falten in der Abdeckung (10) gebildet werden, wenn das vordere Hauptquerglied (14) nach hinten bewegt wird, um die Öffnung freizulegen, **dadurch gekennzeichnet**, daß jedes Hauptquerglied (14, 16, 18) einen Führungsschuh (26, 28, 32, 34, 36, 38) an jedem Ende aufweist, der mit der entsprechenden Führungsschiene (22, 24) in Eingriff steht, wobei jeder Führungsschuh (32, 34, 36, 38) an den hinteren Hauptquergliedern (16, 18) einen elastisch ausgebildeten Arretierungsabschnitt (214) zum Eingriff mit einem komplementären Abschnitt (218) an der Führungsschiene (22, 24) trägt, um seine Bewegung nach hinten aus seiner vordersten Position zu verhindern, und jeder Arretierungsabschnitt (214) zugehörige Freigabemittel (212) aufweist, um mittels Nockenmitteln (216) an dem entsprechenden Führungsschuh (26, 28, 32, 34) des nächstvorderen Hauptquergliedes (14, 16) vor dem betreffenden hinteren Hauptquerglied (16, 18) derart in Eingriff zu gelangen, daß ein Freigeben des Arretierungsabschnittes (214) von seinem komplementären Abschnitt (218) bewirkt wird, wenn die benachbarten Führungsschuhe (26, 28, 32, 34, 36, 38) zur Anlage aneinander gelangen.

2. Öffnungsdach nach Anspruch 1, wobei jeder Führungsschuh (32, 34, 36, 38) an den hinteren Hauptquergliedern (16, 18) einen nach vorn stehenden elastischen Finger (210) aufweist, der den Arretierungsabschnitt (214) führt.

3. Öffnungsdach nach Anspruch 2, wobei das Freigabemittel eine Nockenrampe (212) an dem elastischen Finger (210) aufweist, und das Nockenmittel eine komplementäre Nockenrampe (216) an dem hinteren Ende des Führungsschuhs (26, 28, 32, 34) vor dem nachfolgenden aufweist.

4. Öffnungsdach nach Anspruch 3, wobei jeder komplementäre Abschnitt (218) an der Führungsschiene (22, 24) eine Rampe (222) an seinem hinteren Ende aufweist, um den entsprechenden Arretierungsabschnitt (214) so nach oben anzuheben, wie sich der entsprechende Führungsschuh (32, 36) nach vorn bewegt.

5. Öffnungsdach nach einem der vorhergehenden Ansprüche, ferner mit jeweils einem Hilfsquerglied (46, 52, 54) hinter jedem Zwischenquerglied (40, 48, 50).

6. Öffnungsdach nach einem der vorhergehenden Ansprüche, wobei das vordere Hauptquerglied (14) eine Raste mit einem winklig bewegbaren Rasthaken (120) aufweist, der mit einem Rand einer Rastplatte (130) an dem vorderen Rand (128) der Öffnung in dem Fahrzeugdach in Eingriff bringbar ist, wobei die Rastplatte (130) eine Mehrzahl von verschiebbar angebrachten Ausgleichsplatten (134, 136) aufweist, welche in eine Position bewegbar sind, in welcher sie zwischen der Rastplatte (130) und dem Rasthaken (120) in Eingriff gebracht sind.

7. Öffnungsdach nach einem der vorhergehenden Ansprüche, wobei die Führungsschuhe (26, 28) für das vordere Hauptquerglied (14) an einem vorderen Träger (70) befestigt sind, an welchem ein Paar Nockenschieber (78, 90) zur querverlaufenden geradlinigen Bewegung angebracht sind, jeder Nockenschieber (78, 90) einen geneigten Nockenspalt (80, 98) zur Aufnahme eines Stifts (86, 96) aufweist, welcher an dem vorderen Hauptquerglied (14) befestigt ist, wodurch die Querbewegung des Nockenschiebers (78, 90) eine vertikale Bewegung des vorderen Hauptquergliedes (14) bewirkt.

8. Öffnungsdach nach einem der vorhergehenden Ansprüche, wobei die Abdeckung (10) eine Klappe (178) aus elastischem Material aufweist, die an ihrer unteren Fläche benachbart zu zumindest einem Teil ihrer Peripherie derart angeordnet ist, daß, wenn das Dach mit gespannter Abdeckung (10) in geschlossener Position ist, die Klappe (178) eine Dichtung bildet, um zu verhindern, daß Wasser, das an der Oberfläche des Fahrzeugdaches (180) vorliegt, unter die Abdeckung (10) geblasen wird.

## Revendications

1. Toit ouvrant pour véhicule, du type comprenant un élément de fermeture (10) en matière flexible en plaque pour fermer une ouverture ménagée dans le toit du véhicule, l'élément de fermeture (10) étant supporté par une traverse principale antérieure (14) et un certain nombre de traverses principales postérieures (16, 18) qui sont guidées à leurs extrémités sur des rails de guidage (22, 24) s'étendant le long de chaque côté d'une ouverture longitudinale ménagée dans le toit du véhicule, et par des traverses intermédiaires (40, 48, 50) portées, depuis les traverses principales (14, 16, 18) par des doigts élastiques (42, 44, 56, 58, 60, 62) s'étendant vers l'arrière qui sont fixés aux traverses principales (14, 16, 18) par leurs extrémités antérieures et sont accrochés au niveau de leurs extrémités postérieures dans les traverses intermédiaires (40, 48, 50) et qui maintiennent une pression dirigée vers le haut exercée sur les traverses intermédiires (40, 48, 50), grâce à quoi des plis transversaux se forment dans l'élément de fermeture lorsqu'on fait reculer la traverse principale antérieure (14) pour découvrir l'ouverture, caractérisé en ce que chacune des traverses principales (14, 16, 18) comporte à chaque extrémité une griffe de guidage respective (26, 28, 32, 34, 36, 38) qui s'engage dans le rail de guidage correspondant (22, 24), chaque griffe de guidage (32, 34, 36, 38) présente sur les traverses principales postérieures (16, 18) portant un moyen en forme de cliquet (214) monté de manière élastique et conçu pour coopérer avec un moyen de forme complémentaire (218) présent sur le rail de guidage (22, 24) pour empêcher celui-ci de reculer à partir de sa position la plus vers l'avant, chaque moyen en forme de cliquet (214) ayant un moyen de libération correspondant (212) conçu pour être sollicité par un moyen de poussée (216) présent sur la griffe de guidage correspondante (26, 28, 32, 34) de la prochaine traverse principale (14, 16) en regard de cette traverse principale postérieure (16, 18) de façon à amener ledit moyen en forme de cliquet (214) à se dégager de son moyen de forme complémentaire (218) lorsque des griffes de guidage adjacentes (26, 28, 32, 34, 36, 38) viennent buter les unes contre les autres.

2. Toit ouvrant selon la revendication 1, dans lequel chaque griffe de guidage (32, 34, 36, 38) située sur la traverse principale postérieure (16, 18) a un doigt élastique (210) faisant saillie vers l'avant, qui porte le moyen en forme de cliquet (214).

3. Toit ouvrant selon la revendication 2, dans lequel le moyen de libération comporte une rampe (212) de came sur le doigt élastique (210) et le moyen de poussée comporte une rampe (216) de came complémentaire à l'extrémité arrière de la prochaine griffe de guidage (26, 28, 32, 34) en regard.

4. Toit ouvrant selon la revendication 3, dans lequel chaque moyen de forme complémentaire (218) présent sur le rail de guidage (22, 24) comporte à son extrémité arrière une rampe (222) pour soulever vers le haut le moyen formant cliquet correspondant (214) à mesure que la griffe de guidage correspondantye (32, 36) avance.

5. Toit ouvrant selon l'une quelconque des revendications précédentes, comportant en outre une traverse auxilaiire respective (46, 52, 54) derrière chaque traverse intermédiaire (40, 48, 50).

6. Toit ouvrant selon l'une quelconque des revendications précédentes, dans lequel la traverse principale antérieure (14) comporte un verrou comprenant un crochet de verrouillage (120) à mobilité angulaire pouvant coopérer avec un bord d'une plaque de verrouillage (130) sur le bord antérieur (128) de l'ouverture ménagée dans le toit du véhicule, la plaque de verrouillage (130) ayant une pluralité de cales (134, 136) montées de manière à pouvoir coulisser, pouvant venir se placer dans une position dans laquelle elles sont engagées entre la plaque de verrouillage (130) et le crochet de verrouillage (120).

7. Toit ouvrant selon l'une quelconque des revendications précédentes, dans lequel les griffes de guidage (26, 28) pour la traverse principale antérieure (14) sont fixées à un chariot antérieur (70) sur lequel une paire de coulisseaux (78, 90) à cames sont montés pour effectuer un mouvement transversal rectiligne, chaque coulisseau (78, 90) à came comportant une rainure inclinée (80, 98) de came pour recevoir un axe (86, 96) fixé à la traverse principale antérieure (14), grâce à quoi le mouvement transversal des coulisseaux (78, 90) à cames provoque un mouvement vertical de la traverse principale antérieure (14).

8. Toit ouvrant selon l'une quelconque des revendications précédentes, dans lequel l'élément de fermeture (10) comporte un volet (178) en matière élastique fixé à sa surface inférieure contiguë au moins à une partie de son pourtour, de faon que, lorsque le toit est dans sa position fermée avec l'élément de fermeture (10) tendu, le volet (178) forme un élément d'étanchéité pour empêcher l'eau présente sur la surface du toit (180) du véhicule d'être projetée sous l'élément de fermeture (10).
